(19) Europäisches Patentamt
European Patent Office
Office européen des brevets

(11) **EP 2 348 867 B1**

(12) **FASCICULE DE BREVET EUROPEEN**

(45) Date de publication et mention
de la délivrance du brevet:
**11.06.2014 Bulletin 2014/24**

(51) Int Cl.:
***A01N 59/14*** *(2006.01)*    ***A01N 25/04*** *(2006.01)*
***A01P 3/00*** *(2006.01)*

(21) Numéro de dépôt: **08866196.2**

(22) Date de dépôt: **29.12.2008**

(86) Numéro de dépôt international:
**PCT/EP2008/068331**

(87) Numéro de publication internationale:
**WO 2009/083585 (09.07.2009 Gazette 2009/28)**

(54) **COMPOSITION ET PROCEDE POUR LE TRAITEMENT DE LA CERCOSPORIOSE DU BANANIER**

ZUSAMMENSETZUNG UND VERFAHREN ZUR BEHANDLUNG VON ZERKOSPORIOSE BEI BANANENSTAUDEN

COMPOSITION AND METHOD FOR TREATING CERCOSPORIOSIS OF THE BANANA TREE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.12.2007 EP 07291647**

(43) Date de publication de la demande:
**03.08.2011 Bulletin 2011/31**

(73) Titulaire: **TOTAL MARKETING SERVICES**
**92800 Puteaux (FR)**

(72) Inventeurs:
• **BLACKMAN, Gordon**
**1380 Lasnes (BE)**
• **BOELS, Gauthier**
**1070 Bruxelles (BE)**
• **BUREAU, Eric**
**78125 Saint Hilarion (FR)**

(74) Mandataire: **Pecher, Nicolas et al**
**Pecher & de Groote sprl**
**Centre Monnet**
**Avenue Jean Monnet, 1**
**1348 Louvain-la-Neuve (BE)**

(56) Documents cités:
**EP-A- 0 263 702    EP-A- 0 263 704**
**EP-A- 0 263 706    WO-A-03/073858**

**Description**

**DOMAINE TECHNIQUE**

L'invention se rapporte à une composition pour le traitement des maladies cryptogamiques des plantes, à un procédé de traitement avec et à l'utilisation de la dite composition à titre préventif et curatif des maladies cryptogamiques. En particulier, l'invention se rapporte au traitement des cercosporioses des bananiers et plantains.

**DESCRIPTION DE L'ETAT DE LA TECHNIQUE**

La cercosporiose noire ou maladie des raies noires du bananier causée par le champignon ascomycète *Mycosphaerella fijiensis* et la cercosporiose jaune causée par le champignon ascomycète *Mycosphaerella musicola* sont les maladies foliaires les plus destructrices de la culture bananière. Les attaques réduisent la photosynthèse, et, si le nombre de feuilles fonctionnelles est insuffisant entre la floraison et la récolte, le régime mûrit sur pied prématurément, privant ainsi le producteur de sa commercialisation.

Le contrôle de la maladie peut être effectué en utilisant divers types de fongicides. Les fongicides de contact agissent lorsqu'ils sont en contact avec le champignon. Les fongicides systémiques doivent être absorbés par la plante pour agir. L'usage de fongicides permet encore de lutter efficacement contre les cercosporioses dans les plantations commerciales, mais leurs effets sur l'environnement sont préoccupants. Bien qu'il soit possible de réduire sensiblement le nombre des traitements si ceux-ci sont pratiqués dans le cadre d'une lutte raisonnée sur avertissement, des souches de *Mycosphaerella fijiensis* et de *M. musicola* ont développé une résistance à la plupart de ces produits dans toutes les régions de production du globe (soit en Amérique Latine, dans les Caraïbes, en Afrique et en Asie).

Ces fongicides systémiques sont en général appliqués en combinaison avec un agent adjuvant qui peut être un composé hydrocarboné, le mélange étant appliqué sous forme d'émulsion par vaporisation sur les feuilles. Ici, le problème des composés hydrocarbonés est celui de la phytotoxicité de ces composés vis-à-vis des végétaux mais également la faculté de ces hydrocarbures à laisser passer suffisamment de lumière pour que le mécanisme de la photosynthèse ne soit pas perturbé.

Le mode d'action de *Mycosphaerella fijiensis* comprend la production d'une enzyme de dégradation des parois cellulaires végétales, entraînant la dégradation des tissus. Cette dégradation libère le contenu cellulaire, qui sert de substrat au développement du microorganisme, permettant ainsi le développement de la maladie. On connaît par WO 03/073858 un procédé de lutte contre les maladies des végétaux par inhibition des enzymes extracellulaires des microorganismes contaminants. Ce document montre l'efficacité du bore, sous forme d'acide borique, dans l'inhibition des enzymes dégradatives extracellulaires. Cependant, la composition décrite, obtenue sous forme de poudre peu soluble, est appliquée à l'état d'une solution ou d'une suspension aqueuse que l'on pulvérise sur les végétaux ou dans laquelle on les immerge. Cependant, de telles solutions ou suspensions aqueuses ne conviennent donc pas pour l'épandage aérien en solution. De plus, cette composition s'est avérée phytotoxique à l'égard de certains végétaux (courgettes) aux concentrations efficaces. Des tests ont montré en effet que pour obtenir l'effet désiré, des doses de 530 g/ha, au moyen d'une solution à 30g/l d'acide borique, étaient nécessaires, et que ces doses avaient par ailleurs un effet négatif sur le végétal. Enfin, son efficacité à l'égard de la cercosporiose noire n'a pas été prouvée.

On connaît par le document WO 2005/074687 un procédé de traitement de maladies du bananier par application d'un antibiotique polyène, préférentiellement la natamycine. Cet antibiotique est mis en solution aqueuse puis pulvérisé sur les végétaux ou ceux-ci sont baignés dans celle-ci. L'utilisation répétée d'un tel antibiotique présente un risque d'apparition de résistances et est donc un danger pour les écosystèmes.

Il est connu d'après les documents EP0263702, EP0263704 et EP0263706 d'introduire des complexes métalliques dans des huiles minérales, ces complexes agissant comme additif dispersant dans la composition d'huiles lubrifiantes pour moteur ou dans du dans du fioul : cependant, ces huiles sont de viscosité bien trop élevée, de 2.5 à 12 cst à 100° C, c'est-à-dire bien au-delà de 15 cst à 40 °C, et de nature trop toxique pour être utilisées dans le cadre de la présente invention.

Il existe donc un besoin d' une composition de traitement des maladies cryptogamiques des plantes, en particulier des cercosporioses, qui soit facile à épandre quel que soit le mode d'épandage par avion ou par système d'aspersion terrestre et qui ne diminue pas les mécanismes de la photosynthèse, qui prolonge la durée d'action du principe actif de la dite composition, qui ne crée pas de résistance, soit efficace à dose réduite, et ne soit pas toxique pour l'utilisateur, le végétal ou pour l'environnement. En particulier, il existe un besoin d'une composition de traitement des maladies cryptogamiques des plantes qui présente l'efficacité de l'acide borique sans en présenter les effets phytotoxiques.

## RESUME DE L'INVENTION

La présente invention vise à fournir une composition pour le traitement des cercosporioses du bananier qui ne provoque pas de développement de résistance de la part du champignon provoquant la maladie. Elle concerne également le procédé de traitement et l'utilisation de la composition sur les feuilles de la plante en pré-récolte et sur le coussinet des mains de bananes. On entend par coussinet, la cicatrice laissée après la séparation des bananes de la hampe du régime.

Suivant un premier aspect, l'invention se rapporte à une composition de traitement des maladies cryptogamiques des plantes applicable directement sur le végétal, cette composition étant de manière préférée adaptée à la cercosporiose des bananiers et plantains, telle que la cercosporiose noire ou la cercosporiose jaune.

La composition comprend une suspension dans une huile minérale de viscosité variant de 7 à 15 cst à 40°C d'un composant actif contre la maladie, comportant un chélate de bore et/ou un complexe de bore. On mesure la viscosité selon la norme NF EN ISO 3104 datée d'août 1996. Cette norme prescrit une méthode de détermination de la viscosité cinématique des produits pétroliers liquides opaques et transparents par mesure du temps d'écoulement d'un volume de produit sous l'action de son propre poids à travers un viscosimètre capillaire en verre et la viscosité dynamique de ce même liquide. Ces mesures sont faites à différentes températures et la mesure est donnée en $mm^2/s$ ou centistokes (cst).

La composition comprend de préférence de 0.1 à 50% en volume du composant actif. Les compositions selon l'invention peuvent constituer une bouillie vaporisable qui lorsqu'elle se dépose à la surface des feuilles constitue un film. Ce film du fait de sa viscosité adaptée reste suffisamment longtemps à la surface des végétaux traités, ce qui permet au principe actif qu'il contient de pénétrer dans les végétaux. On a même constaté qu'il favorisait cette pénétration même si l'huile minérale elle-même ne pénétrait pas dans les végétaux. En outre, du fait de cette viscosité adaptée, le film ne constituait pas un filtre diminuant le processus de photosynthèse nécessaire au développement normal des végétaux.

L'huile minérale selon l'invention est un mélange d'hydrocarbures issu d'une coupe pétrolière obtenue par distillation (ASTM D1160, 10 mmHg), pour lequel la fourchette de température auxquelles 10%-90% de l'huile se distillent est inférieure ou égale à 50°C et le point de mi-distillation auquel 50% de l'huile se distille est compris entre 170 °C et 240 °C. La norme ASTM D1160 prescrit une méthode de distillation sous vide de 10mm de Hg afin d'établir la courbe de distillation des mélanges d'hydrocarbures pétroliers qui soit représentative, répétable et reproductible.

Une composition préférée selon l'invention comprendra de 10 à 25% en volume du composant actif dans la composition. L' huile sera choisie dépourvue de dérivés hydrocarbonés aromatiques, c'est à dire en contiendra moins de 0.1% en poids, ce qui permettra d'utiliser une telle composition selon l'invention dans tous types d'agriculture y compris l'agriculture biologique selon les normes en vigueur dans chaque pays.

De manière préférée, l'huile minérale est un mélange d'hydrocarbures comprenant plus de 50% en poids de paraffines de 15 à 30 atomes de carbone. Plus particulièrement, elle est composée à plus de 50 % en poids de paraffines comprenant de 19 à 26 atomes de carbone.

Par paraffines, on entend les paraffines normales et les isoparaffines. Dans un mode préféré, l'huile minérale selon l'invention est composée également de plus de 20 % en poids de naphtène.

Dans la composition selon l'invention, le composant actif contre la maladie comporte de préférence un ou plusieurs constituants sélectionnés parmi le groupe constitué par un chélate de bore, un complexe de bore, l'EDTA, les enzymes anti-fongiques, un chitosane et le 4-FPBA (4-formyl phenyl boronic acid) et leurs mélanges en suspension dans l'eau ou dans l'huile ou en solution aqueuse.

Un chélate est un complexe organométallique cyclique stable et non ionisé entre un ion métallique (cation) et un agent chélatant (ou chélateur). Le chélate se distingue du simple complexe par le fait que le métal peut se fixer à l'agent chélateur par au moins deux liaisons de coordination, à la manière d'une pince. Grâce à ces liaisons multiples, les chélates sont des complexes particulièrement stables. Un agent chélatant est un réactif organique qui forme des composés de coordination peu solubles et contenant au moins deux groupements fonctionnels. Chacun de ces groupements est capable de se lier à un cation par la mise en commun d'une paire d'électron. Ces groupements forment des cycles à 5 ou 6 atomes.

Le chélate de bore peut être obtenu par une réaction de chélation de l'acide borique avec un agent chélatant choisi parmi l'EDTA, le DTPA, l'EDDHA, l'HEDTA, l'EDDHMA, l'EDDCHA, l'acide nitrilotriacétique, les polyamines, les polyols et leurs mélanges. Les agents chélatants préférés utilisés dans la composition de l'invention pour chélater le bore peuvent être :

- l'acide éthylène diamine tétraacétique : EDTA ($C_{10}H_{16}O_8N_2$)
- l'acide diéthylène triamine pentaacétique : DTPA ($C_{14}H_{23}O_{10}N_3$)
- l'acide éthylène diamine-di(o-hydroxyphényl acétique): EDDHA ($C_{18}H_{20}O_6N_2$)
- l'acide hydroxy-2-éthylène diamine triacétique : HEDTA ($C_{10}H_{18}O_7N_2$)

- l'acide ethyldiamine-di (o-hydroxy-p-methyl phényl) acétique : EDDHMA ($C_{20}H_{24}N_2O_6$)
- l'acide éthylène diamine-di(5-carboxy-2-hydroxyphényl) acétique : EDDCHA ($C_{20}H_{20}O_{10}N_2$)
- l'acide nitrilotriacétique (NTA)
- les polyamines
- les polyols ($C_nH_{2n+2}O_n$) ayant de préférence un indice n de 5 ou 6, et
- les mélanges de ces composés.

L'agent chélatant est avantageusement un polyol, de préférence en C6 ou en C5, de préférence le sorbitol, le mannitol, l'alcool furfurique, ou leurs mélanges.

La composition peut comporter des enzymes anti-fongiques sélectionnés parmi le groupe constitué par les protéases, les carbohydrases, telles que les alpha-amylases, les β-glucanases et les xylanases, et les phospholipases et leurs mélanges.

La composition peut également comporter un chitosane, composé de la distribution aléatoire de D-glucosamine liée par ß-(1-4) (unité désacétylée) et de N-acétyl-D-glucosamine (unité acétylée).

Le chitosane peut être produit par désacétylation chimique (en milieu alcalin) ou enzymatique de la chitine, composant de la carapace (exosquelette) des crustacés et de la paroi des champignons. En particulier, celui des champignons préférés est l'*Agaricus bisporus.*

Le complexe de bore peut être obtenu par une réaction de complexation de l'acide borique avec un agent de complexation choisi parmi les alkanolamines, préférentiellement l'éthanolamine, la méthanolamine, la propanolamine et leurs mélanges.

Les alkanolamines sont des composés de formule générale $OH\text{-}\{CH_2\}_n\text{-}NH_2$. Dans la présente invention les alkanolamines utilisées sont préférentiellement l'éthanolamine (n=2) ou les alkanolamines ayant un indice n compris entre 1 et 6.

La composition comprend avantageusement de 0.05 g/l à 100 g/l de bore. Les demandeurs ont observé que, de manière inattendue, une telle concentration de bore dans la composition était efficace, sans pour autant être phytotoxique aux doses efficaces. L'apport de bore sous forme chélatée ou complexée permet une meilleure stabilisation du bore dans la plante, une meilleure pénétration du composant actif et de son transport dans la plante.

De manière préférée, la composition suivant l'invention comporte également un surfactant. Ce surfactant peut être choisi parmi les surfactants non ioniques tels que des éthoxylates d'alkylphénol, par exemple des éthoxylates d'octylphénol, de préférence du Triton X45.

Suivant un autre aspect, l'invention se rapporte à un procédé d'application de la composition selon l'invention pour le traitement des maladies cryptogamiques des plantes et des végétaux, plus particulièrement de la cercosporiose des bananiers et des plantains.

Ce procédé selon l'invention comporte la pulvérisation de la composition sur les feuilles et/ou sur les fruits, ou le trempage du végétal ou de ses fruits dans cette composition.

L'épandage de la dite composition peut se faire par voie aérienne ou terrestre sur les végétaux en pré récolte, ou encore par vaporisation ou trempage sur les parties sensibles à la contamination des végétaux ou des fruits, par exemple sur les coussinets de régimes de bananes en post récolte.

Cette composition et ce procédé selon l'invention peuvent en outre être utilisés aussi bien en agriculture traditionnelle qu'en agriculture biologique, l'huile minérale étant dépourvue de composés aromatiques (inférieur à 0.1% en poids dans la composition) et présentant une écotoxicité acceptable.

Pour permettre de tels épandages, la composition est obtenue par mise en émulsion du composant actif contre la maladie avec l'huile minérale, cette action étant réalisée avant l'épandage.

Un autre objet de l'invention est d'utiliser l'huile minérale contenue dans la dite composition selon l'invention comme vecteur de transfert de composants actifs dans les végétaux pour le traitement des maladies cryptogamiques des plantes et des fruits et/ou d'enzymes.

Ainsi les caractéristiques de l'huile minérale utilisée, notamment sa viscosité et sa faible teneur en hydrocarbures aromatiques en font un élément déterminant dans le traitement de la maladie, car elle favorise l'augmentation du temps de contact entre le composant actif et le végétal malade, elle ne pénètre pas dans le végétal et ne limite pas en faisant écran les phénomènes de photosynthèse nécessaires au développement des végétaux. Ainsi l'huile minérale est choisie parmi les mélanges d'hydrocarbures de viscosité à 40°C variant de 7 à 15 cst et de préférence de 8 à 10 cst, comprenant plus de 50% en poids de paraffines de 15 à 30 atomes de carbone et moins de 0.1 % en poids d'hydrocarbures aromatiques. Les huiles minérales préférées sont celles contenant plus de 50 % en poids de paraffines comprenant de 19 à 26 atomes de carbone, le taux de naphtènes demeurant supérieur ou égal à 20% en poids.

La viscosité équilibrée de l'huile minérale signifie également une basse volatilité. Sa tension superficielle explique la plus grande persistance de la couche huileuse sur les feuilles. Le phénomène de lavage, qui est responsable de la consommation excessive des fongicides est donc évité. La durée optimale de contact est due à une évaporation homogène associée à un intervalle de distillation étroit (moins de 50 °C). La pénétration rapide du composant actif est facilitée par la teneur paraffinique élevée de l'huile minérale. La structure moléculaire de cette huile minérale permet une dissolution rapide dans la cuticule protégeant les feuilles.

Ses fonctions sont notamment de permettre une répartition uniforme sur la cible (les cigares et les feuilles ouvertes), d'augmenter la durée du contact et la pénétration du composant actif dans la feuille ainsi qu'une meilleure distribution lors de l'application, et de ralentir le développement de la maladie en augmentant la durée d'incubation du champignon. La faible viscosité de cette huile facilite l'application du produit. Un film adhésif est formé sur les feuilles, ce qui permet un bon contact entre le composant actif contenu dans l'adjuvant et le champignon, tout en évitant le lessivage du produit par les pluies ou l'arrosage. Il n'oppose aucun écran limitant les mécanismes de la photosynthèse.

D'autres aspects et avantages de formes d'exécution de l'invention seront discutés avec référence aux figures et à la description détaillée des formes d'exécution préférées.

## BREVE DESCRIPTION DES DESSINS

La Fig. 1 est une photographie de boîtes de Pétri à l'issue d'un test de six jours de croissance de *Mycosphaerella fijiensis.*

La Fig. 2 représente la consommation d'$O_2$ en milieu aqueux, en mg/l, dans des bouteilles contenant une solution inoculée avec *Mycosphaerella fijiensis* et traitées avec une composition de l'état de la technique et plusieurs compositions selon l'invention.

La Fig. 3 représente l'état d'évolution de la maladie (EE) au cours du temps, pour quatre tests effectués dans le champ.

Les Fig. 4 et 5 représentent respectivement la plus jeune feuille nécrosée (PJFN) et la plus jeune feuille à tirets (PJFT) au cours du temps, pour les mêmes quatre tests effectués dans le champ.

La Fig.6 est un graphe représentant la croissance de *Mycosphaerella fijiensis* dans quatre séries de boîtes de Pétri, respectivement seul, en présence d'huile minérale seule, en présence d'un complexe chélaté du bore seul, et enfin d'une composition selon l'invention.

La Fig.7 représente la consommation d'O2 en milieu aqueux, en mg/l, dans des bouteilles contenant une solution inoculée avec *Mycosphaerella fijiensis* et traitées avec plusieurs compositions.

## DESCRIPTION DETAILLEE DE L'INVENTION

Exemple 1

Une première série d'essais a été effectuée en laboratoire pour sélectionner les inhibiteurs d'enzymes extracellulaires utilisables pour cette application. Un test a été réalisé dans des boîtes de Pétri dans le but de suivre le développement du champignon *Mycosphaerella fijiensis.* On prépare une composition A contenant 105 g/l de bore complexé par 180 g/l d'une alkanolamine et chélaté par 180 g/l de polyols et une composition B contenant 100 g/l de bore complexé par 360 g/l d'éthanolamine. On prépare par ailleurs une huile minérale constituée de 56 % de paraffines et de 44 % de naphtènes. Cette huile minérale a une viscosité à 40°C de 8.7 cst mesurée suivant la norme NF EN ISO 3104 d'août 1996, et est constituée d'une coupe pétrolière obtenue par distillation, pour laquelle la fourchette de températures auxquelles 10 à 90 % se distillent est de 16°C et le point de mi-distillation auquel 50 % de l'huile se distille est de 197°C.

La composition 1 suivant l'invention comprend 30 % en volume de composition A et 70 % en volume d'huile minérale.

La composition 2 suivant l'invention comprend 30 % en volume de composition B et 70 % en volume d'huile minérale.

Les polyols utilisés sont de préférence des polyols en C6 ou C5, et de manière préférée, ces polyols sont le sorbitol, le mannitol et leurs mélanges. Le polyol utilisé est par exemple un mélange de polyols à base de sorbitol et de mannitol.

Le test a été effectué dans les conditions suivantes. Dix fragments de mycélium sont transférés dans un tube à essais contenant 10 ml d'eau distillée stérile et agité au vortex pendant une minute pour les fragmenter. 1 ml de cette suspension est prélevé et étalé uniformément dans des boites de Pétri contenant un milieu de culture V8. Les cultures sont maintenues à une température comprise entre 20 et 25 °C avec un cycle lumineux 12/12. La préparation du milieu de culture se fait comme suit :

- agar (20 g/l) ;
- jus de légume V8 (100 ml/l de jus de légume) ;
- $CaCO_3$ (0.2 g/l) ;
- eau déminéralisée (900 ml).

Le milieu est ensuite porté à 80°C à l'aide d'une plaque chauffante de manière à dissoudre l'agar. On laisse refroidir le milieu puis il est porté à pH 6 à l'aide de soude si nécessaire. Le milieu est ensuite autoclavé 20 minutes à 120 °C. On ajoute 40 mg/l de streptomycine et 60 mg/l de pénicilline lorsque le milieu a refroidi.

Quinze boîtes sont préparées. Avant l'ajout du milieu de croissance, 1 % en volume de la composition 1 selon l'invention est ajouté pour cinq d'entre elles et 1% en volume de la composition 2 selon l'invention est ajouté pour cinq autres d'entre elles. Les cinq dernières sont utilisées comme référence. Chaque boîte est ensuite inoculée au moyen d'un échantillon de *Mycosphaerella fijiensis,* supporté par un morceau d'agar. La croissance du champignon est observée visuellement à 25 °C en photopériodes 12/12.

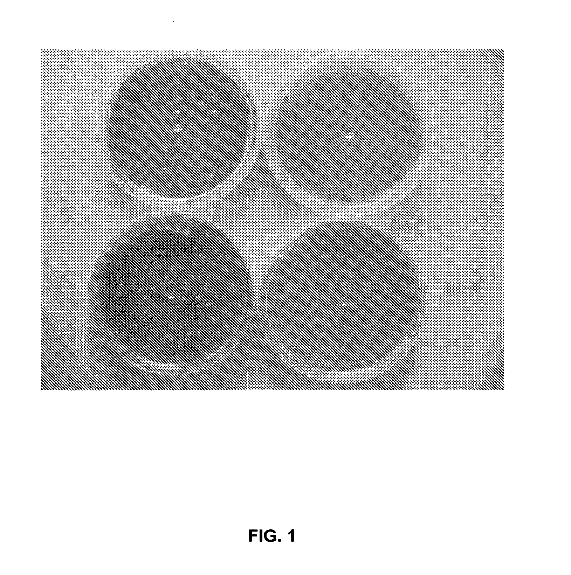

Les résultats des tests sur boites de Pétri sont indiqués à la Fig. 1. A gauche, on observe deux des cinq boîtes de Pétri de référence, et à droite on observe deux des boîtes de Pétri dans lesquelles chacune des compositions 1 et 2 a été ajoutée, après six jours. Dans la boîte au-dessus à droite de la Fig. 1, on a ajouté la composition 1, et dans la boîte en dessous à droite de la Fig.1, on a ajouté la composition 2. Le résultat est clair. Dans les boîtes contenant les inhibiteurs, aucun développement du champignon n'est observé, alors que dans les boîtes de référence, le microorganisme colonise le milieu de culture. La présence de chacune des deux compositions 1 et 2 suivant l'invention prévient donc la croissance de *Mycosphaerella fijiensis* dans le milieu de croissance.

Exemple 2

Le second test, en milieu liquide, est effectué avec le même milieu de croissance, mais sans agar. Ce milieu est stérilisé en autoclave, et 1% en volume des compositions 1 ou 2 selon l'invention utilisées à l'exemple 1 sont ajoutés respectivement dans les échantillons traités. Un troisième traitement est préparé en ajoutant au milieu 1 % en volume de la composition 1 et 1 g/l d'EDTA (composition 3). Ce milieu est mis dans des bouteilles stérilisées fermées munies d'un dispositif manométrique électronique (OXITOP EC100). Deux bouteilles sont utilisées pour chaque traitement et deux bouteilles servent de référence, c'est-à-dire ne sont pas traitées. Toutes les bouteilles sont inoculées avec *Mycosphaerella fijiensis* et mises en incubation à 25°C en photopériodes 12/12. Le dispositif manométrique permet de mesurer la consommation d'oxygène dans les bouteilles. Cette consommation peut être directement mise en relation avec la croissance du microorganisme.

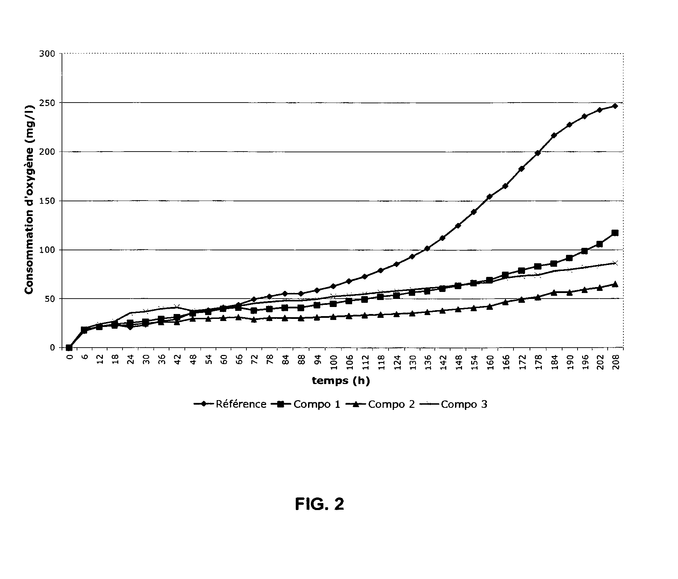

Les résultats de tests en milieu liquide sont indiqués à la Fig. 2 qui représente la consommation d'$O_2$ en mg/l au cours du temps en heures, pour les bouteilles contenant diverses compositions. Dans cette figure, le test de référence (sans traitement) est indiqué par un carré incliné à 45°.

La Fig. 2 représente un test comparatif de l'effet des compositions suivantes sur la croissance du microorganisme:

Carrés : Composition 1 (1 %) ;
Triangles : Composition 2 (1 %);
Croix : Composition 3 = Composition 1 (1 %) avec de l'EDTA (1g/l);
Durant les cent premières heures, la croissance est similaire dans les quatre échantillons. Après cette période, le *Mycosphaerella fijiensis* se développe beaucoup plus dans le traitement de référence. La présence des compositions suivant l'invention inhibe donc la croissance du microorganisme dans une solution liquide de nutriment.

Exemple 3

Des tests en champ ont également été réalisés au Cameroun. Ces tests ont été effectués durant une période de 4 mois, sur une superficie de 0.5 ha, avec 130 bananiers par test. Les traitements ont été appliqués à un rythme de 10 jours d'intervalle. Le cultivar de bananier utilisé est la grande naine (Cavendish, AAA), qui est très sensible à la cercosporiose noire. Ce test a permis de comparer l'action d'une composition de l'invention avec une référence négative (pas de traitement) et deux références positives (deux fongicides classiques). On a utilisé comme références positives le fongicide de contact PENNCOZEB 75 DG (Mancozèbe) : (dithiocarbamate) et le fongicide systémique IMPULSE 800 EC (spiroxamine) (spirocétalamines).

La composition 4 suivant l'invention contient 1% en volume de la composition A de l'exemple 1, soit une composition contenant 105 g/l de bore complexé par 180 g/l d'une alkanolamine et chélaté par 180 g/l de polyols, 98 % en volume d'huile minérale de l'exemple 1 et 1% en volume de Triton X45. L'huile minérale est celle utilisée aux exemples 1 et 2. Elle a une viscosité à 40 °C de 8.7 cst. Elle est constituée par 56 % de paraffines et 44% de naphtènes.

Traitements appliqués :

- T1 : Non traité ;
- T2 : Référence 1 : PENNCOZEB 75 DG (Mancozèbe) 2kg/ha (1.6 kg m.a./ha) + eau (20 l/ha) ;
- T3 : Composition 4 suivant l'invention;

- T4 : Référence 2 : IMPULSE 800 EC (Spiroxamine), 0.4 l/ha (320 g m.a/ha) +huile minérale (19.6 l/ha)

Les traitements sont appliqués au moyen d'un atomiseur porté à dos d'homme (atomiseur STIHL ou SOLO), à 20 l/ha. La surface totale était de 0.5 ha et comportait 805 bananiers, 130 bananiers étant utilisés pour chacun des traitements. Les traitements n'ont pas été répétés, et étaient appliqués de manière aléatoire sur le champ. Dans chacun des groupes, dix plants ont fait l'objet d'une observation détaillée.

Sur les bananiers observés, les valeurs des trois paramètres suivants ont été déterminées chaque semaine :

- l'état d'évolution de la maladie,
- la plus jeune feuille à tirets, et
- la plus jeune feuille nécrosée.

L'état d'évolution de la maladie (EE, ou Disease Development en anglais DD) correspond au niveau d'infestation et est basé sur le nombre total de feuilles, la hauteur du « cigare », le niveau de développement de la maladie pour les feuilles II, III, IV. Calculé suivant l'observation des feuilles : la relation « numéro de feuille » - « stade de la maladie » donne un coefficient comme indiqué dans le tableau ci-après :

Tableau 1

|  |  | Feuille numéro | | |
|---|---|---|---|---|
| Stade de la maladie | | II | III | IV |
| 1 | - | 60 | 40 | 20 |
|  | + | 100 | 80 | 60 |
| 2 | - | 100 | 80 | 60 |
|  | + | 140 | 120 | 100 |
| 3 | - | 140 | 120 | 100 |
|  | + | 180 | 160 | 140 |
| 4 | - | 180 | 160 | 140 |
|  | + | 200 | 200 | 180 |
| 5 | - | 220 | 200 | 180 |
|  | + | 260 | 240 | 220 |
| 6 | - | 260 | 240 | 220 |
|  | + | 300 | 280 | 260 |

L'état d'évolution de la maladie (EE) est donné par l'expression :

$$EE = SEV \times REFi$$

où SEV = SB - CE, où CE est le correctif du stade cigare (feuille en cours de développement) et SB est la somme des coefficients pour chacune des feuilles observées, et
où REFi est le rythme d'émission foliaire (Foliar Emission Rhythm), c'est-à-dire le nombre de feuilles émises entre deux séries d'observations, généralement 7 jours (moyenne effectuée sur les 10 bananiers).

La plus jeune feuille à tiret (PJFT, en anglais Youngest Leaf Attacked YLA) est la plus jeune feuille présentant le stade 1 de la maladie,et la plus jeune feuille nécrosée (PJFN, en anglais Youngest Leaf Spotted YLS) est la plus jeune feuille présentant le stade 4, 5 ou 6 de la maladie. Ces deux derniers paramètres augmentent lorsque les conditions sanitaires dans le champ s'améliorent.

Les tests ont été effectués durant une période de 4 mois. Les traitements ont été effectués de la manière suivante :

Tableau 2

| Traitement | Jours entre deux traitements |
|---|---|
| 1 | 0 |

(suite)

| Traitement | Jours entre deux traitements |
|---|---|
| 2 | 11 |
| 3 | 14 |
| 4 | 7 |
| 5 | 14 |
| 6 | 8 |
| 7 | 12 |
| 8 | 8 |
| 9<br>10 | 9<br>5 |

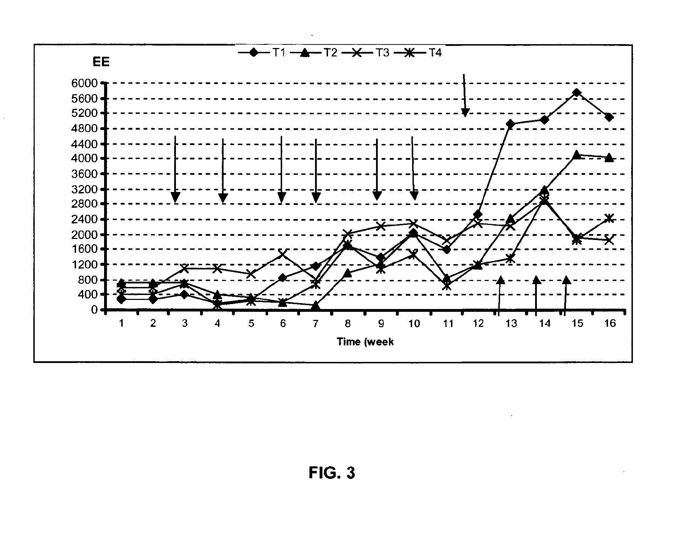

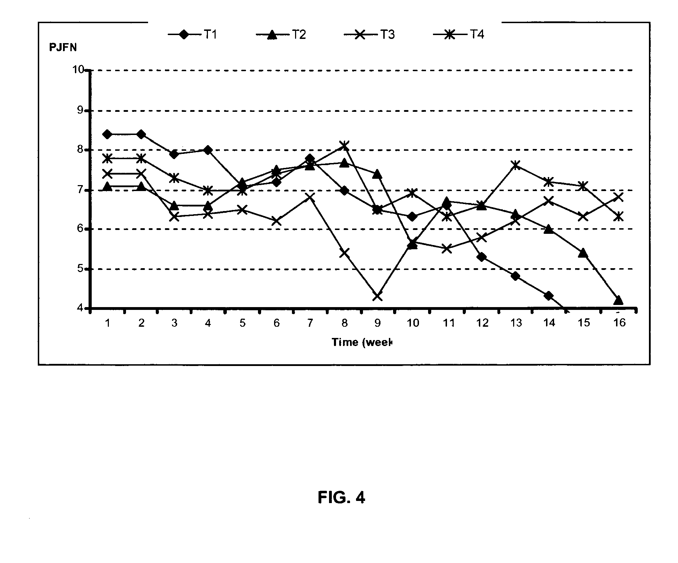

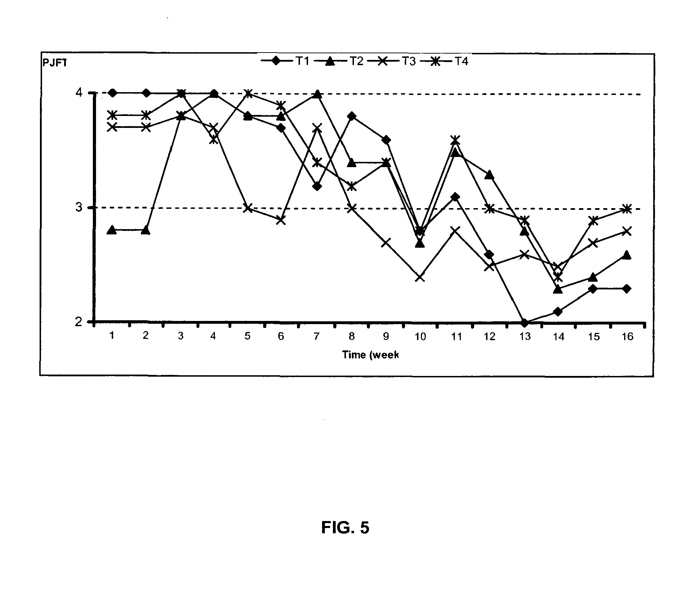

Dans le cas de tests effectués en champ, l'expérimentateur ne maîtrise pas les conditions du test, et ses résultats doivent donc être interprétés à la lumière des conditions effectives du test (conditions climatiques, pression de la maladie). Pour ces tests effectués en champ, représentés aux Figs. 3 à 5, les résultats pour les quatre traitements appliqués, T1 à T4, sont très similaires jusqu'à la semaine 7 ou même à la semaine 12. Ceci est dû à une faible pression de la maladie durant cette période. Les moyennes des résultats collectés au cours de cette première période d'essai ne montrent pas de différence significative entre les traitements. Mais comme les résultats des premières semaines ne montrent aucune tendance, et montrent même la référence négative (T1 - non traité) comme le meilleur traitement au cours des quatre premières semaines, une interprétation complète des résultats est sujette à caution. On a observé que la pression de la maladie a crû à partir de la semaine 12 lorsque le développement de la maladie est devenu significatif. Cette période, au cours de laquelle une forte pression de la maladie a régné, est plus représentative de l'effet des traitements. Des tendances peuvent alors être observées : tant pour le paramètre EE (Fig. 3), que pour les paramètres PJFT et PJFN (Figs. 4 et 5), on observe que les plants traités au moyen de la composition à tester indiquent une réduction du développement de la maladie en comparaison de la référence négative (T1). De plus, la courbe relative au traitement T3 effectué avec la composition 4 suivant l'invention est similaire à celle relative au fongicide systémique IMPULSE + huile minérale (T4) et supérieure à celle du fongicide de contact PENNCOZEB + eau (T2). La composition suivant l'invention constitue donc une alternative aux produits connus, aussi efficace, mais ne présentant pas les inconvénients de ceux-ci.

Cette analyse apparaît plus clairement dans les tableaux qui suivent. Si on observe toute la période couverte par les essais, les différences entre traitements sont faibles, et les résultats observés pour le traitement T3 avec la composition 4 selon l'invention ne sont pas meilleurs. Cependant, si on observe les résultats durant le dernier mois des essais, des différences apparaissent, et les résultats de la composition à tester se rapprochent des observations de la Fig. 3. Le tableau 3 ci-après représente les moyennes des trois paramètres étudiés, (EE, PJFT, PJFN), effectuées sur toute la durée de l'essai.

Tableau 3

| Traitement | EE | PJFN | PJFT |
|---|---|---|---|
| T1 - Référence non traitée | 2410 | 6.1 | 3.1 |
| T2 - PENNCOZEB | 1480 | 6.5 | 3.2 |
| T3 - Composition 4 (invention) | 1759 | 6.2 | 3.0 |
| T4 - IMPULSE | 1269 | 7.0 | 3.3 |

Le tableau 4 ci-après représente les moyennes des trois mêmes paramètres étudiés, effectuées pendant le dernier mois des essais. On observe une différence significative entre les plants traités et la référence non traitée.

Tableau 4

| Traitement | EE | PJFN | PJFT |
|---|---|---|---|
| T1 - Référence non traitée | 4692 | 4.4 | 2.3 |

(suite)

| Traitement | EE | PJFN | PJFT |
|---|---|---|---|
| T2 - PENNCOZEB | 2992 | 5.7 | 2.7 |
| T3 - Composition 4 (invention) | 2235 | 6.4 | 2.6 |
| T4 - IMPULSE | 1957 | 7.0 | 2.8 |

Les tests en laboratoire montrent clairement l'applicabilité et le potentiel de l'utilisation d'une formulation selon l'invention pour le contrôle des cercosporioses. En effet, ces tests montrent l'inhibition de l'organisme pathogène *Mycosphaerella fijiensis.* Les résultats des tests en champ montrent un effet par rapport à la référence négative, et des résultats semblables à ceux des fongicides classiques. En outre, les essais relatifs à la formulation selon l'invention ont été effectués dans des parcelles au voisinage d'autres tests incluant une inoculation par *Mycosphaerella fijiensis.* Cette inoculation a pu créer, par contamination aérienne, une pression de la maladie plus importante sur les zones traitées avec la composition 4 suivant l'invention.

Les essais effectués montrent donc une certaine efficacité. Cette efficacité est valorisable car la formulation selon l'invention se présente comme un moyen de lutte alternatif destiné à être intégré dans un programme de lutte complet et non comme un moyen de substitution aux traitements actuels. Elle permet d'apporter une solution nouvelle et de diminuer la pression des traitements fongicides classiques. De plus, elle présente des avantages importants par rapport à ces traitements. En effet, la formulation selon l'invention limite le développement de la maladie en agissant sur les enzymes extracellulaires produits par les microorganismes pathogènes et non sur le microorganisme lui-même. Ce mode d'action le différencie des fongicides classiques qui agissent en tuant le champignon. L'avantage de cette méthode est qu'elle va permettre d'éviter le développement de résistance des champignons par rapport aux traitements appliqués. Ce développement de résistance est un problème majeur des cultures actuelles et est particulièrement criant pour la culture du bananier. En effet, *Mycosphaerella* a développé des résistances à la quasi-totalité des fongicides systémiques existant sur le marché.

Par ailleurs, en plus d'un mode d'application simple et identique aux techniques actuellement utilisées, la formulation selon l'invention présente d'autres avantages importants par rapport aux traitements classiques: l'absence de toxicité pour les utilisateurs et pour l'environnement. La formulation est non toxique, non phytotoxique, biodégradable et sans rémanence dans l'environnement. Elle est entre autre utilisable en agriculture biologique selon les normes européennes. Un traitement des plantes avec cette formulation présente une bien meilleure sécurité pour l'utilisateur et l'environnement par rapport à un fongicide classique.

Exemple 4

Dans cet exemple des tests de deux types ont été réalisés pour montrer le développement du *Mycosphaerella fijiensis* ; les premiers sur boîtes de Pétri à l'air, les seconds dans les bouteilles fermées pour mesurer la consommation d'oxygène en milieu fermé.

Pour les tests réalisés sur des boîtes de Pétri, on prépare une composition A et une huile minérale telles que décrites à l'exemple 1. La composition 5 suivant l'invention comprend 50 % en volume de composition A et 50 % en volume d'huile minérale.

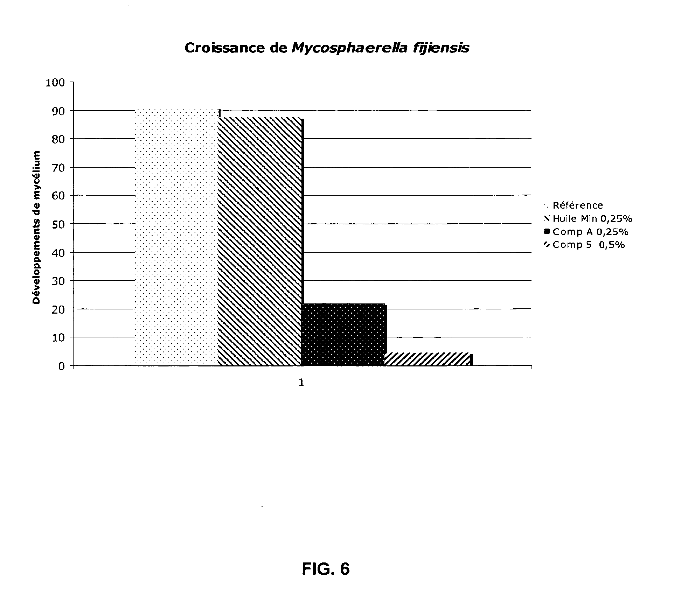

Le premier type de test a été effectué dans les conditions décrites à l'exemple 1. Huit boîtes de test sont préparées. Avant l'ajout du milieu de croissance, 0.5% en volume de la composition 5 selon l'invention est ajouté pour deux d'entre elles, 0.25% en volume de la composition A est ajouté pour deux autres d'entre elles et 0.25% en volume de l'huile minérale est ajouté pour encore deux autres d'entre elles. Les deux dernières sont utilisées comme référence et ne contiennent que la suspension de mycélium et le milieu de croissance. La croissance du champignon est suivie à 25°C en photopériodes 12/12. Après 14 jours, un comptage des points de développement de mycélium est effectué pour chaque boîte de Pétri et une moyenne calculée pour chaque traitement. Les résultats des tests sont indiqués à la Fig. 6.

Les boîtes contenant l'huile minérale présentent en moyenne un développement de mycéliums élevé (87.5 points de développements) et proche de la référence (91). Les boîtes contenant la composition A présentent en moyenne un développement plus faible (22). Enfin, les boîtes contenant la composition 5 selon l'invention présentent le développement de mycélium le plus faible (4.5). L'effet d'inhibition de ce dernier traitement est supérieur à la somme des effets des traitements précédents, démontrant un effet synergique du mélange de la composition A et de huile minérale.

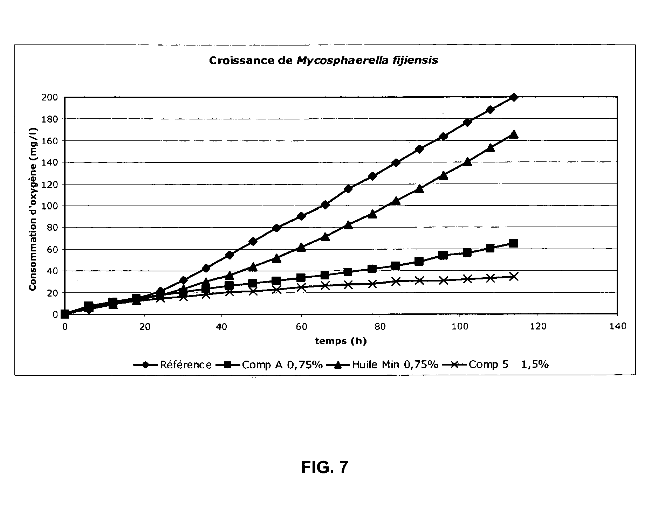

Le second type de test, en milieu liquide, est effectué avec le même milieu de croissance, mais en l'absence d'agar. Ce milieu est stérilisé en autoclave et enfermé dans des bouteilles stérilisées munies d'un dispositif manométrique électronique (OXITOP EC100), deux bouteilles pour chaque traitement. Les différents traitements sont identiques à l'expérience précédente sur boîte de Pétri. Le dosage des compositions A et de l'huile minérale sont chacun de 0.75% en volume, le dosage de la composition 5 selon l'invention de 1.5% en volume. Toutes les bouteilles sont inoculées avec *Mycosphaerella fijiensis* et mises en incubation à 25 °C en photopériodes 12/12. Le dispositif manométrique permet de mesurer la consommation d'oxygène dans les bouteilles. Cette consommation peut être directement mise en relation avec la croissance du microorganisme. Les résultats des tests en milieu liquide sont indiqués à la Fig. 7.

L'inhibition de la croissance du champignon la plus marquée est obtenue pour la composition 5 selon l'invention. L'huile minérale ralentit seulement le démarrage de la croissance de *Mycosphaerella fijiensis* alors que la composition A provoque une inhibition certes importante, mais nettement améliorée par le mélange avec l'huile.

**Revendications**

1. Composition pour le traitement des maladies cryptogamiques des plantes **caractérisée en ce qu'**elle comprend une suspension dans une huile minérale de viscosité mesurée suivant la norme NF EN ISO 3104 variant de 7 à 15 cst à 40 °C d'un composant actif comportant un chélate de bore et/ou un complexe de bore, et **en ce que** l'huile minérale est un mélange d'hydrocarbures issu d'une coupe pétrolière obtenue par distillation (ASTM D160, 10 mmHg), pour lequel la fourchette de température auxquelles 10% à 90% de l'huile se distillent est inférieure ou égale à 50°C et le point de mi-distillation auquel 50% de l'huile se distille est compris entre 170 et 240 °C, ladite huile minérale comprenant moins de 0,1% en poids de composés aromatiques.

2. Composition selon la revendication 1 **caractérisée en ce qu'**elle contient de 0.1 à 50% en volume du composant actif.

3. Composition selon la revendication 2 **caractérisée en ce qu'**elle contient de 10 à 25% en volume du composant actif.

4. Composition selon l'une des revendications 1 à 3 **caractérisée en ce que** l'huile minérale est un mélange d'hydrocarbures comprenant plus de 50% en poids de paraffines de 15 à 30 atomes de carbone et moins de 0.1 % en poids de dérivés hydrocarbonés aromatiques.

5. Composition selon l'une des revendications 1 à 4 **caractérisée en ce que** l'huile minérale est composée de plus de 50 % en poids de paraffines comprenant de 19 à 26 atomes de carbone.

6. Composition selon l'une des revendications 1 à 5 **caractérisée en ce que** le composant actif comporte un ou plusieurs constituants sélectionnés parmi le groupe constitué par un chélate de bore, un complexe de bore, l'EDTA, une enzyme anti-fongique, le chitosane, le 4-FPBA et leurs mélanges.

7. Composition selon l'une des revendications 1 à 6 **caractérisée en ce que** la composition comporte de 0.05 à 100 g /l de bore.

8. Composition suivant l'une quelconque des revendications 6 à 7 **caractérisée en ce que** le chélate de bore est susceptible d'être obtenu par une réaction de chélatation de l'acide borique avec un agent chélatant choisi parmi l'EDTA, le DTPA, l'EDDHA, l'HEDTA, l'EDDHMA, l'EDDCHA, l'acide nitrilotriacétique, les polyamines, les polyols et leurs mélanges.

9. Composition suivant la revendication 8 **caractérisée en ce que** l'agent chélatant est un polyol, de préférence en C6 ou en C5, de préférence le sorbitol, le mannitol, l'alcool furfurique, et leurs mélanges.

10. Composition suivant l'une quelconque des revendications précédentes, **caractérisée en ce que** le complexe de bore étant susceptible d'être obtenu par une réaction de complexation de l'acide borique avec un agent complexant, ledit l'agent complexant est une alcanolamine choisie préférentiellement parmi l'éthanolamine, la méthanolamine, la propanolamine et leurs mélanges.

11. Composition suivant la revendication 10, **caractérisée en ce que** les enzymes anti-fongiques sont sélectionnés parmi le groupe constitué par les protéases, les carbohydrases, telles que les alpha-amylases, les β-glucanases et les xylanases, et les phospholipases et leurs mélanges.

12. Composition suivant l'une quelconque des revendications 1 à 11, **caractérisée en ce qu'**elle comporte un surfactant non ionique, de préférence ledit surfactant non ionique est un éthoxylate d'octyphénol.

**13.** Procédé d'application sur les végétaux de la composition suivant l'une quelconque des revendications 1 à 12 pour le traitement des maladies cryptogamiques des plantes

**14.** Procédé selon la revendication 13 **caractérisé en ce qu'**il comporte la pulvérisation de la composition sur les feuilles et/ou sur les fruits, ou le trempage du végétal ou de ses fruits dans ladite composition.

**15.** Utilisation de la composition selon l'une des revendications de 1 à 12 à l'agriculture biologique.

**16.** Utilisation de l'huile minérale de la composition suivant l'une quelconque des revendications 1 à 12 comme vecteur de transfert du composant actif dans les végétaux pour le traitement des maladies cryptogamiques des plantes et des fruits et/ou d'enzymes.

**Patentansprüche**

**1.** Zusammensetzung für die Behandlung von kryptogamen Pflanzenkrankheiten, **dadurch gekennzeichnet, dass** sie eine Suspension eines Wirkbestandteils umfassend ein Borchelat und/oder einen Borkomplex in einem Mineralöl mit einer Viskosität, gemessen entsprechend der Norm NF EN ISO 3104 von 7 bis 15 cst bei 40°C, umfasst und dass es sich bei dem Mineralöl um eine Kohlenwasserstoffmischung aus einer mittels Destillation (ASTM D160, 10 mmHg) erhaltenen Erdölfraktion handelt, bei der der Temperaturbereich, in dem 10% bis 90% des Öls destillieren, 50°C oder darunter beträgt und der mittlere Destillationspunkt, bei dem 50% des Öls destillieren, zwischen 170 und 240°C liegt, wobei das Mineralöl weniger als 0,1 Gew.-% aromatische Verbindungen umfasst.

**2.** Zusammensetzung nach Anspruch 1, **dadurch gekennzeichnet, dass** sie 0,1 bis 50 Vol.-% Aktivbestandteil umfasst.

**3.** Zusammensetzung nach Anspruch 2, **dadurch gekennzeichnet, dass** sie 10 bis 25 Vol.-% Aktivbestandteil umfasst.

**4.** Zusammensetzung nach einem der Ansprüche 1 bis 3, **dadurch gekennzeichnet, dass** es sich bei dem Mineralöl um eine Kohlenwasserstoffmischung umfassend mehr als 50 Gew.-% Paraffine mit 15 bis 30 Kohlenstoffatomen und weniger als 0,1 Gew.-% aromatische Kohlenwasserstoffderivate handelt.

**5.** Zusammensetzung nach einem der Ansprüche 1 bis 4, **dadurch gekennzeichnet, dass** sich das Mineralöl aus mehr als 50 Gew.-% Paraffinen mit 19 bis 26 Kohlenstoffatomen zusammensetzt.

**6.** Zusammensetzung nach einem der Ansprüche 1 bis 5, **dadurch gekennzeichnet, dass** der Aktivbestandteil eine oder mehrere Komponenten, ausgewählt aus der Gruppe bestehend aus einem Borchelat, einem Borkomplex, EDTA, einem antifungalen Enzym, Chitosan, 4-FPBA und ihren Mischungen, umfasst.

**7.** Zusammensetzung nach einem der Ansprüche 1 bis 6, **dadurch gekennzeichnet, dass** die Zusammensetzung 0,05 bis 100 g/l Bor umfasst.

**8.** Zusammensetzung nach einem der Ansprüche 6 bis 7, **dadurch gekennzeichnet, dass** das Borchelat durch eine Chelatisierungsreaktion zwischen Borsäure und einem Chealitiserungsmittel aus der Reihe EDTA, DTPA, EDDHA, HEDTA, EDDHMA, EDDCHA, Nitrilotriessigsäure, Polyaminen, Polyolen und ihren Mischungen erhältlich ist.

**9.** Zusammensetzung nach Anspruch 8, **dadurch gekennzeichnet, dass** es sich bei dem Chelatisierungsmittel um ein Polyol, vorzugweise ein $C_6$- oder ein $C_5$-Polyol, vorzugsweise Sorbit, Mannit, Furfurylalkohol und ihre Mischungen, handelt.

**10.** Zusammensetzung nach einem der vorhergehenden Ansprüche, **dadurch gekennzeichnet, dass** der Borkomplex durch eine Komplexierungsreaktion zwischen Borsäure und einem Komplexbildner erhältlich ist, wobei es sich bei dem Komplexbildner um ein Alkanolamin, das vorzugweise aus der Reihe Ethanolamin, Methanolamin, Propanolamin und ihren Mischungen ausgewählt ist, handelt.

**11.** Zusammensetzung nach Anspruch 10, **dadurch gekennzeichnet, dass** die antifungalen Enzyme aus der Gruppe bestehend aus den Proteasen, Carbohydrasen wie alpha-Amylasen, β-Glucanasen und Xylanasen, Phospholipasen und ihren Mischungen ausgewählt sind.

**12.** Zusammensetzung nach einem der Ansprüche 1 bis 11, **dadurch gekennzeichnet, dass** sie ein nichtionisches Tensid umfasst, wobei es sich bei dem nichtionischen Tensid vorzugweise um ein Octylphenolethoxylat handelt.

**13.** Verfahren zum Ausbringen der Zusammensetzung nach einem der Ansprüche 1 bis 12 auf Pflanzen für die Behandlung von kryptogamen Pflanzenkrankheiten.

**14.** Verfahren nach Anspruch 13, **dadurch gekennzeichnet, dass** es das Verspritzen der Zusammensetzung auf die Blätter und/oder die Früchte oder das Tauchen der Pflanze oder ihrer Früchte in die Zusammensetzung umfasst.

**15.** Verwendung der Zusammensetzung nach einem der Ansprüche 1 bis 12 in der biologischen Landwirtschaft.

**16.** Verwendung von Mineralöl der Zusammensetzung nach einem der Ansprüche 1 bis 12 als Mittel für die Übertragung des Aktivbestandteils in die Pflanzen für die Behandlung von kryptogamen Pflanzen- und Fruchtkrankheiten und/oder von Enzymen.

**Claims**

**1.** Composition for the treatment of cryptogamic diseases of plants, **characterized in that** it comprises a suspension, in a mineral oil with a viscosity, measured according to the standard NF EN ISO 3104, varying from 7 to 15 cSt at 40 °C, of an active component comprising a boron chelate and/or a boron complex, and **in that** the mineral oil is a mixture of hydrocarbons which results from a petroleum fraction obtained by distillation (ASTM D160, 10 mmHg) for which the temperature range at which from 10% to 90% of the oil distill is less than or equal to 50°C and the middle distillation point at which 50% of the oil distills is between 170 and 240 °C, said mineral oil comprising less than 0.1% by weight of aromatic compounds.

**2.** Composition according to Claim 1, **characterized in that** it comprises from 0.1 to 50% by volume of the active component.

**3.** Composition according to Claim 2, **characterized in that** it comprises from 10 to 25% by volume of the active component.

**4.** Composition according to one of Claims 1 to 3, **characterized in that** the mineral oil is a mixture of hydrocarbons comprising more than 50% by weight of paraffins of 15 to 30 carbon atoms and less than 0.1 % by weight of aromatic hydrocarbon derivatives.

**5.** Composition according to one of Claims 1 to 4, **characterized in that** the mineral oil is composed of more than 50% by weight of paraffins comprising from 19 to 26 carbon atoms.

**6.** Composition according to one of Claims 1 to 5, **characterized in that** the active component comprises one or more constituents selected from the group consisting of a boron chelate, a boron complex, EDTA, an antifungal enzyme, chitosan, 4-FPBA and their mixtures.

**7.** Composition according to one of Claims 1 to 6, **characterized in that** the composition comprises from 0.05 to 100 g/l of boron.

**8.** Composition according to either one of Claims 6 and 7, **characterized in that** the boron chelate is capable of being obtained by a chelation reaction of boric acid with a chelating agent chosen from EDTA, DTPA, EDDHA, HEDTA, EDDHMA, EDDCHA, nitrilotriacetic acid, polyamines, polyols and their mixtures.

**9.** Composition according to Claim 8, **characterized in that** the chelating agent is a polyol, preferably a $C_6$ or $C_5$ polyol, preferably sorbitol, mannitol, furfuryl alcohol and their mixtures.

**10.** Composition according to any one of the preceding claims, **characterized in that** the boron complex being capable of being obtained by a complexing reaction of boric acid with a complexing agent, said complexing agent is an alkanolamine preferably chosen from ethanolamine, methanolamine, propanolamine and their mixtures.

**11.** Composition according to Claim 10, **characterized in that** the antifungal enzymes are selected from the group consisting of proteases, carbohydrases, such as α-amylases, β-glucanases and xylanases, and phospholipases and their mixtures.

12. Composition according to any one of Claims 1 to 11, **characterized in that** it comprises a nonionic surfactant; preferably said nonionic surfactant is an octylphenol ethoxylate.

13. Method for the application, to plants, of the composition according to any one of Claims 1 to 12 in the treatment of cryptogamic diseases of plants.

14. Method according to Claim 13, **characterized in that** it comprises spraying the composition over the leaves and/or over the fruits, or dipping the plant or its fruits in said composition.

15. Use of the composition according to one of Claims 1 to 12 in biological agriculture.

16. Use of the mineral oil of the composition according to any one of Claims 1 to 12 as vector for transfer of the active component into the plants for the treatment of cryptogamic diseases of plants and fruits and/or enzymes.

FIG. 1

**FIG. 2**

**FIG. 3**

**FIG. 4**

**FIG. 5**

**Croissance de *Mycosphaerella fijiensis***

FIG. 6

FIG. 7

## RÉFÉRENCES CITÉES DANS LA DESCRIPTION

### Documents brevets cités dans la description

- WO 03073858 A
- WO 2005074687 A
- EP 0263702 A
- EP 0263704 A
- EP 0263706 A